(19) **Europäisches Patentamt**
**European Patent Office**
**Office européen des brevets**

(11) **EP 2 455 421 B1**

(12) **EUROPEAN PATENT SPECIFICATION**

(45) Date of publication and mention
of the grant of the patent:
**02.07.2014 Bulletin 2014/27**

(51) Int Cl.:
**C08L 23/10** (2006.01)       **C08K 7/02** (2006.01)
**C08L 23/26** (2006.01)       **C08L 1/02** (2006.01)
**D01F 2/06** (2006.01)        **D04H 1/02** (2006.01)

(21) Application number: **10799614.2**

(22) Date of filing: **13.07.2010**

(86) International application number:
**PCT/JP2010/004529**

(87) International publication number:
**WO 2011/007550 (20.01.2011 Gazette 2011/03)**

(54) **COMPOSITE RESIN COMPOSITION**

VERBUNDHARZZUSAMMENSETZUNG

COMPOSITION COMPLEXE DE RÉSINE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.07.2009 JP 2009166388**

(43) Date of publication of application:
**23.05.2012 Bulletin 2012/21**

(73) Proprietor: **Lion Idemitsu Composites Co., Ltd.**
**Tokyo 110-0006 (JP)**

(72) Inventors:
• **YASUDA, Hiroshi**
**Sodegaura-shi**
**Chiba 299-0205 (JP)**
• **KONTA, Jun**
**Sodegaura-shi**
**Chiba 299-0205 (JP)**
• **UBARA, Atsuhiko**
**Sodegaura-shi**
**Chiba 299-0205 (JP)**

(74) Representative: **Clarke, Lionel Paul**
**Gill Jennings & Every LLP**
**The Broadgate Tower**
**20 Primrose Street**
**London EC2A 2ES (GB)**

(56) References cited:
**EP-A1- 0 822 223**       **CA-A1- 2 350 112**
**CA-A1- 2 407 880**       **GB-A- 170 534**
**JP-A- 1 016 848**        **JP-A- 60 158 236**
**JP-A- 61 225 234**       **JP-A- 63 033 439**
**JP-A- 2009 096 875**

• **JP Schneider: "mechanical performance of short hute fibre reinforced pp", , 1996, XP002693472, Retrieved from the Internet: URL:http://rd.springer.com/article/10.1007 %2FBF00274450?LI=true [retrieved on 2013-03-08]**

**Description**

Background Art

In recent years, a thermoplastic resin reinforced by a vegetable fiber such as kenaf or jute has been actively developed at home and abroad. For example, components obtained by subjecting vegetable fiber mats and thermoplastic resin sheets to compression molding are used in automobiles.

Today, carbon dioxide emissions have attracted more attention than ever. It can be admitted that materials using vegetable fibers are materials which are eco-friendly in respect of carbon neutral.

As for thermoplastic resins which have been reinforced with vegetable fibers, a method for manufacturing a fiber-reinforced resin pellet using discontinuous natural fibers as reinforcing fibers is known. By this method, during the production of a pellet of a long fiber-reinforced composite material composed of a polypropylene-based resin and vegetable fibers (jute), impregnation between the resin and the fibers is improved by allowing them to be mechanically twisted.

However, many of vegetable fibers are in the form of cotton, and commercial production of a composite material of a resin and vegetable fibers is difficult.

In order to solve this problem, Patent Document 1 discloses a method in which a plurality of specific yarns which are obtained by twisting vegetable fibers in the form of a string (so-called a hemp string) are used, and the thus obtained strings are then subjected to pultrusion with further twisting, whereby a long-fiber pellet as a composite of a resin and vegetable fibers is produced.

However, normally, vegetable fibers are formed into yarns by twisting discontinuous fibers. Therefore, they are formed into a string by using spinning oil. As the spinning oil, mineral oil or vegetable oil is used. Since vegetable oil has a lower molecular weight than that of the resin, they serve as a mold release agent when a composite is formed by injection molding. They may bleed when it is formed into a shaped body. Therefore, a problem that durability of a coating film is decreased has been pointed out.

When vegetable fibers are used, as in the case of glass fibers which are generally used, while reinforcing effects are improved as the length of long fibers is increased, a problem such as warping may occur.

Related Art Documents

Patent Documents

Patent Document 1: JP-A-2001-261844

CA 2350112 discloses a process to improve thermal properties of natural fibre composites

EP 0822223 discloses a process for preparing reinforced polyolefins.

SUMMARY OF THE INVENTION

The invention is aimed at providing a method of producing a composite resin composition which is imparted with reinforcing effects, suffers less warping, and suffers less defective coating due to bleeding out.

The inventors made intensive studies, and as a result, have found that, by allowing the amount of organic solvent extractable components contained in vegetable fibers and the amount of vegetable fibers to be specific, a shaped body suffering from a small degree of warping and a small degree of defective coating due to bleeding out of low-molecular weight components can be obtained.

According to the invention, it is possible to provide a composite resin composition which suffers a small degree of warping and has improved coating properties.

MODE FOR CURRYING OUT THE INVENTION

The composite resin composition of the invention comprises a polypropylene-based resin and vegetable fibers. The composite resin composition of the invention is characterized in that the amount of organic solvent extractable components is 1 wt% or less. By allowing the amount of the organic solvent extractable components to be 1 wt% or less, it is possible to suppress bleeding out of the low-molecular components in a shaped body of the resin composition. Therefore, a shaped body suffering from a small degree of coating defects can be obtained. It is preferred that the amount of the organic solvent extractable components be 0.1 wt% or less.

The amount of the organic solvent extractable components of vegetable fibers is calculated by a method in which vegetable fibers are treated by a Soxhlet extractor for 3 hours, and a decrease in amount of vegetable fibers before and after the treatment is calculated.

It is preferable to use an organic solvent with a boiling point of 40°C to 150°C. For example, aromatic organic solvents such as benzene, toluene and xylene or chlorine-containing organic solvents such as methylene chloride can be used. In particular, xylene or methylene chloride can be preferably used. In the invention, it is preferred that the amount of the components extractable with any one of the organic solvents be equal to or less than 1 wt% or less.

The organic solvent extractable components of vegetable fibers can be decreased by degreasing vegetable fibers by an organic solvent, superheated vapor.

As the vegetable fibers, at least one selected from jute, kenaf, paper powder, cotton fibers and regenerated cellulose fibers is used.

As for the form of fibers, it is possible to use mora or sliver before spinning or strings after spinning. Further, it is also possible to use these fibers after degreasing by an organic solvent, super heated vapor. In the meantime, the "mora" means a fiber obtained by keeping jute or to be soaked in water and taken out. The "sliver" means a fiber obtained by adding spinning oil to mora, followed by processing by means of a comb-like device, in the state before forming into a string. The "string" means one formed by twisting the sliver in the form of a string.

In the composite resin composition of the invention, the content of a polypropylene-based resin relative to the total of a polypropylene-based resin and vegetable fibers is 70 to 95 wt%, with the content of vegetable fibers being 5 to 30 wt%. As a result, warping of a shaped body can be suppressed, reinforcement effects by reinforcing fibers can be obtained, and heat resistance is improved. It is preferred that the content of a polypropylene-based resin be 70 to 90 wt%.

According to the invention, it is preferred that the average fiber length of vegetable fibers be 500 to 1000 $\mu$m. With this range, the accuracy of warping dimension of a shaped product can be maintained.

There are no restrictions imposed on the polypropylene resin used in the invention. For example, any of homopolypropylene, block polypropylene and random polypropylene can be used. As the polypropylene, any of $\alpha$-polypropylene and $\beta$-polypropylene can be used. No restrictions are imposed on the fluidity of the resin. Polypropylene having an appropriate fluidity can be used taking the thickness, volume of a shaped product into consideration.

As for the polypropylene resin, only one propylene resin can be used alone, or two or more propylene resins may be used in combination. For example, properties of a composite resin composition may be improved by additionally compounding an elastomer such as an ethylene-$\alpha$-olefin copolymer.

In the invention, in order to improve adhesiveness between a polypropylene-based resin and vegetable fibers as well as to improve mechanical strength of a shaped body, various modifiers can be used.

As the modifier, one which is modified by a carboxylic anhydride group or a glycidyl group, or a hydroxyl group, an amino group, a carboxyl group, such as maleic anhydride-modified polypropylene, maleic anhydride-modified polyethylene, ethylene glycidyl methacrylate and a derivative thereof can be used.

In the invention, it is preferred that maleic anhydride-modified polypropylene be contained in a polypropylene-based resin. As a result, the strength of a composite resin composition can be improved.

The amount of the modifier to be compounded is preferably 0.3 to 5 wt% relative to the total amount of a modifier and vegetable fibers, with 1 wt% to 3 wt% being particularly preferable.

The composite resin composition of the invention may be essentially composed of the polypropylene-based resin and vegetable fibers or may be composed only of these components. The "essentially composed of" means that the composition mentioned above is composed only of a polypropylene-based resin and vegetable fibers, and may contain the above-mentioned modifiers or the following additives in addition to these components.

In order to satisfy the required product quality, the composite resin composition of the invention may contain an additive such as an antioxidant, an antistatic agent, a heat-resistant aging agent, a weathering agent, an inorganic filler, a flame retardant.

The composite resin composition of the invention can be produced by mixing the above-mentioned polypropylene-based resin, vegetable fibers. There are no restrictions imposed on the mixing method. They may be mixed by a known method such as a method in which a mixer is used. Further, they may be melt kneaded by means of an extruder.

In respect of handling properties at the time of shaping, it is preferred that a polypropylene-based resin, vegetable fibers be melt-kneaded in advance, followed by processing into a pellet-like form.

For example, irrespective of the state of a fiber, such as mora, sliver or string, a pellet of a composite resin composition can be produced by subjecting powdery vegetable fiber having a length of about 1 mm or more and a polypropylene-based resin to melt kneading by means of a twin extruder, followed by shaping into the form of a pellet, whereby a composite resin composition pellet can be produced.

By shaping a composite resin composition pellet by a known method such as injection molding, a shaped body having a desired shape can be obtained.

Further, a long-fiber pellet obtained by impregnating vegetable fibers in the form of a string, which have been subjected to a degreasing treatment in advance, with a polypropylene-based resin may be processed into a shaped body. In this case, by adjusting the screw compression ratio during the shaping process, the average fiber length of vegetable fibers may be adjusted.

EXAMPLES

The invention will be explained in more detail with reference to the following examples and comparative examples, which should not be construed as limiting the scope of the invention.

Example 1

70 wt% of block polypropylene having a melt flow rate (MFR) of 30 (J707G manufactured by Prime Polymer Co., Ltd.) and 30 wt% of jute "mora" as vegetable fibers (manufactured by Koizumi Jute Mills Ltd., which had been cut into a length of 2 mm) were subjected to melt kneading by means of a twin extruder (TEX30 manufactured by the Japan Steel Works, Ltd.), whereby a composite resin composition pellet was obtained. Meanwhile, the amount of xylene extractable components of jute "mora" was 0.08 wt%.
By means of an injection molding machine (J180AD manufactured by the Japan Steel Works, Ltd), this pellet was formed into a disk-like shaped body having a thickness of 2 mm and a radius of 15 cm.

Examples 2 to 4, 6 and 7

A disk-like shaped body was produced in the same manner as in Example 1, except that the amount of block polypropylene and the kind and amount of vegetable fibers used were changed as shown in Table 1.
The vegetable fibers used are shown below.
A: Mora of jute (manufactured by Koizumi Jute Mills Ltd., one obtained by cutting into a length of 2 mm) B: Xylene-cleaned product of sliver of jute (manufactured by Koizumi Jute Mills Ltd., one obtained by cutting into a length of 2 mm) (one obtained by immersing 1 kg of sliver in 18 L of xylene overnight, followed by drying)
C: Xylene-cleaned strings of jute (manufactured by Koizumi Jute Mills Ltd.) which had been cut into a length of 2 mm (one obtained by immersing 3 kg of strings in 18 L of xylene overnight, followed by drying). C1: Xylene-cleaned strings of jute (manufactured by Koizumi Jute Mills Ltd.) (one obtained by immersing 3 kg of strings in 18 L of xylene overnight, followed by drying).
D: Mora of kenaf (one obtained by cutting into a length of 2 mm)
E: Paper powder (manufactured by Oji Kinocloth Co., Ltd. Product Name: Lead Healthy Cooking Paper®, which had been cut into a length of 2 mm)
F: Xylene-cleaned strings of regenerated cellulose (manufactured by Kyokuyo Sangyo Co., Ltd. rayon spanned fiber, 1/-) (one obtained by immersing 3 kg of strings in 18 L of xylene overnight, followed by drying)
G: Mora of jute (manufactured by Koizumi Jute Mills Ltd.) (one obtained by cutting into a length of 1 mm) H: Methylene chloride-cleaned strings of jute (manufactured by Koizumi Jute Mills Ltd.) (one obtained by immersing 3 kg of strings in 18 L of methylene chloride overnight, followed by drying)

Example 5

70 wt% of block polypropylene having an MFR of 30 and 30 wt% of a xylene-cleaned product of jute "strings" (C1) were formed into a long-fiber pellet (length: 8 mm) by means of a long-fiber pellet production device (Kobe Steel Ltd.). By means of an injection molding machine (J180AD manufactured by Nippon Steel Corporation), this pellet was formed into a disk-like shaped body having a thickness of 2 mm and a radius of 15 cm.

Example 8

A disk-like shaped body was produced in the same manner as in Example 5, except that a xylene-cleaned product (F) of regenerated cellulose "string" was used.

Example 9

A disk-like shaped body was produced in the same manner as in Example 1, except that 68% of block polypropylene with a MFR of 30 was used and 2 wt% of maleic anhydride-modified polypropylene (Yumex 1001, manufactured by Sanyo Chemical Industries, Ltd.) was further used.

Example 10

A disk-like shaped body was produced in the same manner as in Example 1, except that the "mora" (jute) which has been cut into a length of 1 mm (G) was used instead of the "mora" (jute) which has been cut into a length of 2 mm.

Example 11

A disk-shaped body was produced in the same manner as in Example 5, except that the methylene chloride-cleaned product (H) of the "string" (jute) was used instead of the "string" (jute) (C1).

For the disk-like shaped body as obtained above, the rate of warping and the coating adhesiveness were evaluated. Further, the average fiber length of the vegetable fibers contained in the shaped body was measured. The components of the resin composition, the kind of the vegetable fibers, the amount of organic solvent extractable components (the amount of xylene extractable components or the amount of methylene chloride extractable components) and the results of evaluation are shown in Tables 1 and 2. Evaluation methods are shown below.

(1) Method for measuring the amount of organic solvent extractable components

As the extraction solvent, xylene or methylene chloride was used. 100 g of vegetable fibers was cleaned for 3 hours by means of a Soxhlet extractor. The amount of extractable components was calculated from a decrease in amount of vegetable fibers between and after cleaning.

(2) Method for measuring the ratio of warping and standards of judgment thereof

On a surface plate, a disk-like shaped body (sample) was placed. The amount of warping (D1) of a part of which the degree of warping is largest was measured by means of a height gauge and the amount of warping (D2) of a part on the opposite side which is curved was measured by means of a height gauge. The rate of warping was calculated from D1 and D2 according to the following formula:

$$\text{Rate of warping} = [(D1 + D2) / 2R] \times 100(\%)$$

[D1, D2; Amount of warping (mm), R; Radius of sample (150 mm)]
A sample of which the rate of warping was less than 4% was judged to be good and a sample of which the rate of warping was 4% or more was judged to be poor.

(3) Method for measuring coating properties and standards for judgment thereof

The center of an 80 mm-square injection-molded plate obtained by processing a disk-like shaped body which had been coated by spraying a paint for polypropylene was cut such that a grid pattern in which 10 squares were arranged vertically and laterally at an interval of 1 mm by means of a cutter knife was formed. Cellophane tape (registered trade mark) was adhered to the grid pattern, and the tape was then peeled off. Thereafter, the ratio of an area in the grid pattern of which the coating was peeled was measured.
The areas in which the coating film was peeled were added together, and a case in which the ratio of coating-peeled areas was less than 10% was evaluated as significantly excellent (◎), a case in which the ratio of coating-peeled areas was peeled was 10% or more and less than 20% was evaluated as good (○) and a case in which the ratio of coating-peeled areas was 20% or more was evaluated as poor (×).

(4) Average fiber length

A disk-like shaped body was put in xylene which had been heated to 130°C so that polypropylene was dissolved, followed by filtering, thereby to take out the fibers in the shaped body. After drying in wind, the lengths of 100 fibers were measured by means of a profile projector, and the average value thereof was taken as the average fiber length of the jute in each composition.

Table 1

| | Example 1 | Example 2 | Example 3 | Example 4 | Example 5 | Example 6 | Example 7 | Example 8 |
|---|---|---|---|---|---|---|---|---|
| Amount of polypropylene (wt%) | 70 | 95 | 70 | 70 | 70 | 70 | 70 | 70 |
| Type of vegetable fibers | A | A | B | C | C1 | D | E | F |
| Solvent used for extraction | Xylene | Xylene | Xylene | Xylene | Xylene | Xylene | Xylene | Xylene |
| Amount of organic solvent extractable components (wt%) | 0.08 | 0.08 | 1 | 0.12 | 0.12 | 0.08 | 0.03 | 0.05 |
| Amount of vegetable fibers (wt%) | 30 | 5 | 30 | 30 | 30 | 30 | 30 | 30 |
| Ratio of warping (%) | 3 | 2 | 3 | 3.2 | 3 | 2.5 | 2.0 | 2.8 |
| Adhesiveness of coating film | ◎ | ◎ | ○ | ◎ | ◎ | ◎ | ◎ | ◎ |
| Average fiber length (μm) | 780 | 820 | 750 | 750 | 780 | 600 | 520 | 850 |

Type of vegetable fibers
A : Mora of jute (cut into 2 mm) B: Xylene-cleaned product of sliver of jute
C: Xylene-cleaned product of jute strings (cut into 2 mm) C1: Xylene-cleaned product of jute strings D : Mora of kenaf (cut into 2 mm)
E : Paper powder (cut into 2 mm) F : Xylene-cleaned product of regenerated cellulose

Table 2

| | Ex.9 * | Ex. 10 | Ex. 11 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|
| Amount of polypropylene (wt%) | 68 | 70 | 70 | 70 | 95 | 70 | 70 | 70 | 70 |
| Amount of modifier (wt%) | 2 | - | - | - | - | - | - | - | - |
| Type of vegetable fiber | A | G | H | B' | B' | C' | C' | C' | B' |
| Solvent used for extraction | Xylene | Xylene | Methylene chloride | Xylene | Xylene | Xylene | Xyelene | Xylene | Xylene |
| Amount of xylene extractable components (wt%) | 0.08 | 0.08 | 0.15 | 2 | 2 | 2.5 | 2.5 | 2.5 | 2.7 |
| Amount of vegetable fibers (wt%) | 30 | 30 | 30 | 30 | 5 | 30 | 30 | 30 | 30 |
| Rate of warping (%) | 3 | 2 | 3 | 3 | 2 | 3 | 3 | 7 | 5 |
| Adhesiveness of coating film | ◎ | ◎ | ◎ | × | × | × | × | × | × |
| Average fiber length ($\mu$m) | 980 | 500 | 780 | 750 | 820 | 750 | 780 | 1500 | 1120 |

Type of vegetable fibers
A: Mora of jute (2mm) G: Mora of jute (1 mm) H: Methylene chloride-cleaned product of jute strings
B': Uncleaned product of jute slivers C': Uncleaned product of jute strings
* not according to invention

EP 2 455 421 B1

Comparative Example 1

A disk-like shaped body was produced in the same manner as in Example 1, except that an uncleaned product B' of the "sliver" (jute) B used in Examples was used. The results of evaluation are shown in Table 2.

Comparative Example 2

A disk-like shaped body was produced in the same manner as in Example 2, except that an uncleaned product B' of the "sliver" (jute) B used in Examples was used. The results of evaluation are shown in Table 2.

Comparative Example 3

A disk-like shaped body was produced in the same manner as in Example 1, except that an uncleaned product C' of the "string" (jute) C used in Examples was used. The results of evaluation are shown in Table 2.

Comparative Example 4

A disk-like shaped body was produced in the same manner as in Example 5, except that an uncleaned product C' of the "string" (jute) C used in Examples was used. The results of evaluation are shown in Table 2.

Comparative Example 5

A long-fiber pellet (length: 8 mm) containing 40 wt% of vegetable fibers was produced by means of a long-fiber pellet production device (manufactured by Kobe Steel, Ltd.) by using 60 wt% of block polypropylene having an MFR of 30 and an uncleaned product C' of the "string" (jute) C used in Examples. The thus obtained pellet and a pellet of block polypropylene having an MFR of 30 were mixed and an adjustment was made such that the amount of vegetable fibers becomes 30 wt%. This mixture of the pellets was formed into a disk-like shaped body having a thickness of 2 mm and a radius of 15 cm by means of an injection molding machine (J180AD manufactured by the Japan Steel Works, Ltd.), and evaluated in the same manner as in Example 1. The results are shown in Table 2.

Comparative Example 6

A disk-like shaped body was produced in the same manner as in Example 1, except that an uncleaned product B' of the "sliver" (jute) B used in Examples which had been cut into a length of 10 mm was used. The results are shown in Table 2.

INDUSTRIAL APPLICABILITY

The composite resin composition of the invention can be used in exterior parts (a bumper, a cable cover, a spoiler, for example), automobile components such as components inside an engine room and interior parts (an instrument panel, a trim package, for example), and distribution materials such as pallets, containers, wagons and shopping baskets.

**Claims**

1. A method of producing a composite resin composition which comprises mixing a polypropylene-based resin and vegetable fibers,
   the content of the polypropylene-based resin being 70 to 95 wt%;
   the content of the vegetable fibers being 5 to 30 wt%;
   the polypropylene-based resin being one or two or more polypropylene-based resin selected from homopolypropylene, block polypropylene and random polypropylene;
   the vegetable fibers being at least one vegetable fibers selected from jute, kenaf, paper powder, cotton fiber and regenerated cellulose fiber, and
   an amount of components extractable with an organic solvent in the vegetable fibers being 1 wt% or less.

2. The method of producing a composite resin composition according to claim 1, wherein the organic solvent is an organic solvent having a boiling point of 40°C to 150°C.

3. The method of producing a composite resin composition according to claim 1 or 2, wherein the organic solvent is an aromatic organic solvent or a chlorine-containing organic solvent.

4. The method of producing a composite resin composition according to any of claims 1 to 3, wherein the organic solvent is xylene or methylene chloride.

5. The method of producing a composite resin composition according to any of claims 1 to 4, wherein the polypropylene-based resin comprises maleic anhydride-modified polypropylene.

6. The method of producing a composite resin composition according to any of claims 1 to 5, wherein the average fiber length of the vegetable fibers is 500 to 1000 $\mu$m.

7. The method of producing a composite resin composition according to any of claims 1 to 6, wherein the amount of the components extractable with an organic solvent is 0.1 wt% or less.

8. The method of producing a composite resin composition according to any of claims 1 to 7, wherein the polypropylene-based resin is a block polypropylene.

**Patentansprüche**

1. Verfahren zur Herstellung einer Verbundharzzusammensetzung, welches das Mischen eines auf Polypropylen basierenden Harzes und Pflanzenfasern umfasst,
   wobei der Gehalt des auf Polypropylen basierenden Harzes 70 bis 95 Gew.-% beträgt;
   wobei der Gehalt der Pflanzenfasern 5 bis 30 Gew.-% beträgt;
   wobei das auf Polypropylen basierende Harz ein oder zwei oder mehr auf Polypropylen basierende(s) Harz(e), ausgewählt aus Homopolypropylen, Blockpolypropylen und statistischem Polypropylen, ist;
   wobei die Pflanzenfasern mindestens eine Pflanzenfaser, ausgewählt aus Jute, Kenaf, Papierpulver, einer Baumwollfaser und einer regenerierten Cellulosefaser, ist; und
   eine mit einem organischen Lösungsmittel extrahierbare Komponentenmenge in den Pflanzenfasern 1 Gew.-% oder weniger beträgt.

2. Verfahren zur Herstellung einer Verbundharzzusammensetzung nach Anspruch 1, wobei das organische Lösungsmittel ein organisches Lösungsmittel mit einem Siedepunkt von 40 bis 150 °C ist.

3. Verfahren zur Herstellung einer Verbundharzzusammensetzung nach Anspruch 1 oder 2, wobei das organische Lösungsmittel ein aromatisches organisches Lösungsmittel oder ein Chlor enthaltendes organisches Lösungsmittel ist.

4. Verfahren zur Herstellung einer Verbundharzzusammensetzung nach einem der Ansprüche 1 bis 3, wobei das organische Lösungsmittel Xylen oder Methylenchlorid ist.

5. Verfahren zur Herstellung einer Verbundharzzusammensetzung nach einem der Ansprüche 1 bis 4, wobei das auf Polypropylen basierende Harz mit Maleinsäureanhydrid modifiziertes Polypropylen umfasst.

6. Verfahren zur Herstellung einer Verbundharzzusammensetzung nach einem der Ansprüche 1 bis 5, wobei die durchschnittliche Faserlänge der Pflanzenfasern 500 bis 1000 $\mu$m beträgt.

7. Verfahren zur Herstellung einer Verbundharzzusammensetzung nach einem der Ansprüche 1 bis 6, wobei die Menge der mit einem organischen Lösungsmittel extrahierbaren Komponenten 0,1 Gew-% oder weniger beträgt.

8. Verfahren zur Herstellung einer Verbundharzzusammensetzung nach einem der Ansprüche 1 bis 7, wobei das auf Polypropylen basierende Harz ein Blockpolypropylen ist.

**Revendications**

1. Procédé de production d'une composition de résine comprenant un mélange de résine à base de polypropylène et de fibres végétales,
la teneur en résine à base de propylène étant comprise entre 70 et 95 % en poids
la teneur en fibres végétales étant comprise entre 5 et 30 % en poids ;
la résine à base de polypropylène étant une ou deux ou plusieurs résines à base de polypropylène sélectionnées parmi l'homopolypropylène, le polypropylène bloc et le polypropylène aléatoire ;
les fibres végétales étant au moins une des fibres végétales sélectionnées parmi le jute, le sisal, la poudre de papier, la fibre de coton et la fibre de cellulose régénérée ; et
une quantité de composants extractibles avec un solvant organique dans les fibres végétales représentant 1 % en poids ou moins.

2. Procédé de production d'une composition complexe de résine selon la revendication 1, dans lequel le solvant organique est un solvant organique ayant un point d'ébullition compris entre de 40° C et 150° C

3. Procédé de production d'une composition complexe de résine selon la revendication 1 ou 2, dans laquelle le solvant organique est un solvant organique aromatique ou un solvant organique contenant du chlore.

4. Procédé de production d'une composition complexe de résine selon l'une quelconque des revendications 1 à 3, dans lequel le solvant organique est le xylène ou le chlorure de méthylène.

5. Procédé de production d'une composition complexe de résine selon l'une quelconque des revendications 1 à 4, dans lequel la résine à base de polypropylène renferme du polypropylène modifié par de l'anhydride maléique.

6. Procédé de production d'une composition complexe de résine selon l'une quelconque des revendications 1 à 5, dans lequel la longueur de fibre moyenne des fibres végétales est comprise entre 500 et 1000 $\mu$m.

7. Procédé de production d'une composition complexe de résine selon l'une quelconque des revendications 1 à 6, dans lequel la quantité des composants extractibles ayant un solvant organique représente 0,1 % en poids ou est inférieure.

8. Procédé de production d'une composition complexe de résine selon l'une quelconque des revendications 1 à 7, dans lequel la résine à base de polypropylène est un polypropylène bloc.

**EP 2 455 421 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001261844 A
- CA 2350112
- EP 0822223 A